(19) Europäisches Patentamt
European Patent Office
Office européen des brevets

(11) EP 1 237 218 A2

(12) # EUROPEAN PATENT APPLICATION

(43) Date of publication:
**04.09.2002 Bulletin 2002/36**

(51) Int Cl.[7]: **H01M 8/04**

(21) Application number: **01204636.3**

(22) Date of filing: **03.12.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **22.12.2000 US 746955**

(71) Applicant: **Delphi Technologies, Inc.**
**Troy, MI 48007 (US)**

(72) Inventors:
- **Haltiner, Karl Jacob Jr.**
**Fairport, NY 14450 (US)**
- **Keegan, Kevin Richard**
**Hilton, NY 14468 (US)**

(74) Representative: **Denton, Michael John et al**
**Delphi Automotive Systems,**
**Centre Technique Paris,**
**117, avenue des Nations,**
**B.P. 60059**
**95972 Roissy Charles de Gaulle Cédex (FR)**

(54) **Fuel cell system incorporating pressure control**

(57) A fuel cell system (200) includes a fuel cell (110) disposed within an enclosure (130). Pressure is controlled within the fuel cell by a flow control (140); and pressure is controlled within the enclosure by an enclosure pressure control (150). The pressure control system (230) for a reformer (210) within an enclosure (220), the pressure control system comprises a flow control for controlling pressure within the reformer and a pressure control for controlling pressure within the enclosure. The flow control and pressure control are coordinated to provide a desired pressure differential between the fuel cell and the enclosure.

EP 1 237 218 A2

## Description

### TECHNICAL FIELD

The present disclosure relates to fuel cells, and more particularly relates to a fuel cell system incorporating pressure control.

### BACKGROUND

Alternative transportation fuels have been represented as enablers to reduce toxic emissions in comparison to those generated by conventional fuels. At the same time, tighter emission standards and significant innovation in catalyst formulations and engine controls have led to dramatic improvements in the low emission performance and robustness of gasoline and diesel engine systems. This has certainly reduced the environmental differential between optimized conventional and alternative fuel vehicle systems. However, many technical challenges remain to make the conventionally fueled internal combustion engine a nearly zero emission system having the efficiency necessary to make the vehicle commercially viable.

Alternative fuels cover a wide spectrum of potential environmental benefits, ranging from incremental toxic and carbon dioxide ($CO_2$) emission improvements (reformulated gasoline, alcohols, liquid petroleum gas, etc.) to significant toxic and $CO_2$ emission improvements (natural gas, dimethylether, etc.). Hydrogen is clearly the ultimate environmental fuel, with potential as a nearly emission free internal combustion engine fuel (including $CO_2$ if it comes from a non-fossil source). Unfortunately, the market-based economics of alternative fuels, or new power train systems, are uncertain in the short to mid-term.

The automotive industry has made very significant progress in reducing automotive emissions in both the mandated test procedures and the "real world". This has resulted in some added cost and complexity of engine management systems, yet those costs are offset by other advantages of computer controls: increased power density, fuel efficiency, drivability, reliability and real-time diagnostics.

Future initiatives to require zero emission vehicles appear to be taking us into a new regulatory paradigm where asymptotically smaller environmental benefits come at a very large incremental cost. Yet, even an "ultra low emission" certified vehicle can emit high emissions in limited extreme ambient and operating conditions or with failed or degraded components.

One approach to addressing the issue of emissions is the employment of fuel cells, particularly solid oxide fuel cells ("SOFC"), in an automobile. Particularly, the application of SOFC's as on-board auxiliary power units for transportation provides a significant benefit to power many automotive systems.

A fuel cell is an energy conversion device that generates electricity and heat by electrochemically combining a gaseous fuel, such as hydrogen, carbon monoxide, or a hydrocarbon, and an oxidant, such as air or oxygen, across an ion-conducting electrolyte. The fuel cell converts chemical energy into electrical energy. A fuel cell generally consists of two electrodes positioned on opposites of an electrolyte. The oxidant passes over the oxygen electrode (cathode) while the fuel passes over the fuel electrode (anode), generating electricity, water, and heat.

SOFC's are constructed entirely of solid-state materials, utilizing an ion conductive oxide ceramic as the electrolyte. A conventional electrochemical cell in a SOFC is comprised of an anode and a cathode with an electrolyte disposed therebetween. In a typical SOFC, a fuel flows to the anode where it is oxidized by oxygen ions from the electrolyte, producing electrons that are released to the external circuit, and mostly water and carbon dioxide are removed in the fuel flow stream. At the cathode, the oxidant accepts electrons from the external circuit to form oxygen ions. The oxygen ions migrate across the electrolyte to the anode. The flow of electrons through the external circuit provides for consumable or storable electricity. However, each individual electrochemical cell generates a relatively small voltage. Higher voltages are attained by electrically connecting a plurality of electrochemical cells in series to form a stack.

The SOFC cell stack also includes conduits or manifolds to allow passage of the fuel and oxidant into and byproducts, as well as excess fuel and oxidant, out of the stack. Generally, in certain cell configurations, oxidant is fed to the structure from a manifold located on one side of the stack, while fuel is provided from a manifold located on an adjacent side of the stack. The fuel and oxidant are generally pumped through the manifolds.

Seals must be provided around the edges of the manifolds, around the edges of the anodes which face and are generally isolated from the air manifold, and around the edges of the cathodes which face and are generally isolated from the fuel manifold. Reliability of SOFC's if often dependent on these seals.

Another approach to controlling leakage and promoting reliability in SOFC systems is to enclose a stack within an enclosure maintained at desired pressures. However, leakage within the chamber may be detrimental to system performance.

While existing SOFC systems are generally suitable for their intended purposes, there still remains a need for improvements, particularly regarding fluid leakage control.

### SUMMARY

The drawbacks and disadvantages of the prior art are overcome by a fuel cell system including a fuel cell disposed within an enclosure. The fuel cell system

comprises a fuel cell disposed within an enclosure, a fuel cell flow control, and an enclosure pressure control.

The pressure control system for a reformer within an enclosure, the pressure control system comprises a flow control for controlling pressure within the reformer and a pressure control for controlling pressure within the enclosure. The flow control and pressure control are coordinated to provide a desired pressure differential between the fuel cell and the enclosure.

## BRIEF DESCRIPTION OF THE DRAWINGS

Referring now to the figures, , which are meant to be exemplary not limiting, and wherein like elements are numbered alike in the several figures.

Figure 1 is an expanded isometric view of a SOFC.

Figure 2 is a schematic of the operation of a SOFC.

Figure 3 is a schematic of an exemplary embodiment of a SOFC system pressure control system.

Figure 4 is a schematic of an exemplary embodiment of a SOFC system pressure control system incorporating a reformer.

## DETAILED DESCRIPTION

A SOFC system pressure control is described herein, wherein a SOFC is provided within an enclosure such that the fuel flow is operating at a first controlled pressure, and the enclosure is maintained at a second controlled pressure, such that a suitable pressure differential between the SOFC and the enclosure is maintained. Further, a method for operating SOFC systems incorporating pressure control includes varying the difference between the first controlled pressure and the second controlled pressure depending on particular system operation concerns.

Different types of SOFC systems exist, including tubular or planar systems. These various systems, while operating with different cell configurations, have similar functionality. Therefore, reference to a particular cell configuration and components for use within a particular cell configuration are intended to also represent similar components in other cell configurations, where applicable.

Generally, the system may comprise at least one SOFC, an engine, one or more heat exchangers, and optionally, one or more compressors, an exhaust turbine, a catalytic converter, preheating device, plasmatron, electrical source (e.g., battery, capacitor, motor/generator, turbine, and the like, as well as combinations comprising at least one of the foregoing electrical sources), and conventional connections, wiring, control valves, and a multiplicity of electrical loads, including, but not limited to, lights, resistive heaters, blowers, air conditioning compressors, starter motors, traction motors, computer systems, radio/stereo systems, and a multiplicity of sensors and actuators, and the like, as well as conventional components.

One configuration of a SOFC includes a stack of planar SOFC's. An electrochemical cell stack 10 is illustrated in Figure 1. A fuel electrode or anode 30 and an oxygen electrode or cathode 50 are disposed on opposite sides of a solid electrolyte 40. An end cap 20 includes a surface 22 that is configured for disposal adjacent to the anode 30 for both electrical contact and also to provide fuel distribution. An interconnect 24 includes a first interconnect surface 26, and a second interconnect surface 28. Surface 26 is configured for disposal adjacent to the cathode 50 to provide oxidant distribution and electrical contact, and surface 28 is configured for disposal adjacent to an anode 32 of another SOFC. Anode 32 is disposed adjacent to interconnect 24 to illustrate the placement of and ability to stack several electrochemical cells connected to electrochemical cell 10.

The solid electrolyte 40 of the electrochemical cell 10 can be an ion conductor capable of transporting oxygen ions from the cathode 50 to the anode 30, that is compatible with the environment in which the SOFC will be utilized (e.g., temperatures of about -40°C up to about 1,000°C). Generally, solid electrolyte materials include conventional materials, such as ceramics and/or metals (e.g., alloys, oxides, gallates, and the like), including zirconium, yttrium, calcium, magnesium, aluminum, rare earths, and the like, as well as oxides, gallates, aluminates, combinations, and composites comprising at least one of the foregoing materials. Preferably the electrolyte is a rare earth oxide (such as yttria, gadolinia, neodymia, ytterbia, erbia, ceria, and the like) doped with aliovalient oxide(s) (such as magnesia, calcia, strontia, and the like, and other $^{+}2$ valence metal oxides).

The anode 30 and cathode 50, which form phase boundaries (gas/electrolyte/catalyst particle; commonly known as triple points) with the electrolyte 40, can be disposed adjacent to or integral with the electrolyte 40. The anode 30 and cathode 50 are generally formed of a porous material capable of functioning as an electrical conductor and capable of facilitating the appropriate reactions. The porosity of these materials should be sufficient to enable dual directional flow of gases (e.g., to admit the fuel or oxidant gases and permit exit of the byproduct gases), with a porosity of about 20% to about 40% porous, typically preferred.

The composition of the anode 30 and cathode 50 can comprise elements such as zirconium, yttrium, nickel, manganese, strontium, lanthanum, iron, and cobalt, samarium, calcium, proseodynium, and, oxides, alloys, and combinations comprising at least one of the foregoing elements. Preferably, the anode material is formed upon a ceramic skeleton, such as nickel oxide-yttria-stabilized zirconia, and the like, for thermal compatibility.

Either or both the anode 30 and the cathode

50 can be formed on the electrolyte 40 by a variety of techniques including sputtering, chemical vapor deposition, screen printing, spraying, dipping, painting, and stenciling, among others. The electrodes are disposed typically up to about 10 to about 1,000 microns or so in thickness. In the anode supported case, the anode is preferably about 1,000 microns, the electrolyte about 10 microns, and the cathode about 40 microns.

The electrochemical cell 10 can be electrically connected with other electrochemical cells by using for example, interconnect 24. Depending upon the geometry of the SOFC, the fuel and the oxidant flow through the electrochemical cell 10 via the passageways of the end cap 20 and the interconnect 24. The end cap 20 and the interconnect 24 are generally formed of a material capable of withstanding the pressures and temperatures of the SOFC, and capable of conducting electricity. For example, suitable end caps and interconnects can be in the form of mats, fibers (chopped, woven, nonwoven, long, and the like) which are capable of withstanding automobile operating conditions (e.g., temperatures of about -40°C to about 1,000°C) and are electrically conductive material compatible with the oxidizing or reducing nature of the fuel cell environment. Some possible end caps and interconnects can comprise materials such as silver, copper, ferrous materials, strontium, lanthanum, chromium, chrome, gold, platinum, palladium, nickel, titanium, conducting ceramics (e.g., doped rare earth oxides of chromium, manganese, cobalt, nickel, and the like; doped zirconia, including, zirconia doped with titanium, copper, and the like), and the like, as well as alloys, oxides, cermets, composites, and combinations comprising at least one of the foregoing materials.

Each individual electrochemical cell 10 comprising a single anode 30, a single electrolyte 40, and a single cathode 50, generates a relatively small voltage, generally from about 0.5 to about 1.1 volts. Higher voltages are attained by electrically connecting a plurality of electrochemical cells in series to form a stack. The total number of cells forming a stack can range from 2 to several hundred, depending on power requirements, space and weight restrictions, economics, and the like.

The dimensions of each cell may vary generally depending on the spacial requirements and the desired output. Generally, SOFC's may be employed in areas ranging from a microscopic scale, wherein each cell has an area of several microns squared, to an industrial power generation scale, such as in a power plant wherein each cell has an area of several meters squared. Particularly useful dimensions for SOFC's employed in automotive applications are between 50 and 200 squared centimeters per cell ($cm^2$/cell), but it will be understood that these dimensions may vary depending on various design considerations.

In operation, the electrochemical cell 10 produces a current flow as illustrated by current flow arrows 60, 60' in Figure 2. Oxidant gases, such as oxygen or air, can be introduced to the cathode side of the cell, flowing as illustrated by the oxidant flow arrows 64, 64', 64". The oxidant receives the flowing electrons ($e^-$) and converts them into oxide ions ($O^{2-}$), which diffuse through the electrolyte 40 to the anode 30, as depicted in the following reaction:

$$O_2 + 4e^- \rightarrow 2O^{2-}$$

At the anode, the oxide ions react with a fuel, such as hydrogen, carbon monoxide, methane, other hydrocarbons, or a combination comprising at least one of the foregoing fuels, which is introduced to the electrochemical cell 10 as illustrated by the fuel flow arrows 62, 62', 62". The reaction of the fuel and oxide ions produces electrons ($e^-$), which flow outside of the electrochemical cell 10 to the external circuit 70 and back to the cathode 50. The fuel/oxide ion reaction is depicted in the following reactions:

$$H_2 + O^{2-} \rightarrow H_2O + 2e^-$$

(when fuel is hydrogen)

$$CO + O^{2-} \rightarrow CO_2 + 2e^-$$

(when fuel is carbon monoxide)

$$CH_4 + 4O^{2-} \rightarrow 2H_2O + CO_2 + 8e^-$$

(when fuel is methane)

Unreacted fuel and byproducts, such as water or carbon monoxide, exit the electrochemical cell 10 in the fuel stream, as illustrated by fuel stream arrow 66, while excess oxidant exits the electrochemical cell 10, as illustrated by oxidant stream arrow 68.

Basically, the electrolyte 40 conducts these oxide ions ($O^{2-}$) between the anode 30 and the cathode 50, maintaining an overall electrical charge balance. The cycle of flowing electrons ($e^-$) from the anode 30 through the external circuit 70 to the cathode 50 creates electrical energy for harnessing. This electrical energy can be directly utilized by the vehicle to power various electrical parts, including, but not limited to, lights, resistive heaters, blowers, air conditioning compressors, starter motors, traction motors, computer systems, radio/stereo systems, and a multiplicity of sensors and actuators, among others.

Unlike electricity generated in conventional motor vehicles, the electricity produced by the SOFC is direct current which can be matched to the normal system voltage of the vehicle. This minimizes or avoids the need for devices such as diodes, voltage conversion and other losses, such as resistive losses in the wiring

and in/out of the battery, associated with conventional vehicle systems and traditional hybrid electrical systems. This high efficiency electricity allows electrification of the vehicle, including functions such as air conditioning and others, while allowing weight, fuel economy and performance advantages compared to conventional hybrid electric mechanization and conventional internal combustion engine systems.

During start-up and for cabin heating the SOFC can be operated at high adiabatic temperatures, e.g., up to about 1,000°C, subject to catalyst limitations, with typical operating temperatures ranging from about 600°C to about 900°C, and preferably about 650°C to about 800°C. Consequently, at least one heat exchanger is preferably employed to cool the SOFC effluent and conversely heat the air prior to entering the SOFC, with conventional heat exchangers generally employed.

The SOFC stack is typically located in an enclosure generally for thermal and fluid isolation. The enclosure may be part of a segmented enclosure, or a plurality of individual enclosures, which are individually pressurized and actively temperature controlled for specific operational temperature limits.

To facilitate the reaction in the fuel cell, a direct supply of the fuel, such as hydrogen, carbon monoxide, or methane, is preferred. However, concentrated supplies of these fuels are generally expensive and difficult to supply. Therefore, the specific fuel can be supplied by processing a more complex source of the fuel. The fuel utilized in the system is typically chosen based upon the application, expense, availability, and environmental issues relating to the fuel. Possible sources of fuel include conventional fuels such as hydrocarbon fuels, including, but not limited to, conventional liquid fuels, such as gasoline, diesel, ethanol, methanol, kerosene, and others; conventional gaseous fuels, such as natural gas, propane, butane, and others; and alternative fuels, such as hydrogen, biofuels, dimethyl ether, and others; and combinations comprising at least one of the foregoing fuels. The preferred fuel is typically based upon the power density of the engine, with lighter fuels, i.e. those which can be more readily vaporized and/or conventional fuels which are readily available to consumers, generally preferred.

The processing or reforming of hydrocarbon fuels, such as gasoline, is completed to provide an immediate fuel source for rapid start up of the fuel cell as well as protecting the fuel cell by removing impurities. Fuel reforming can be used to convert a hydrocarbon (such as gasoline) or an oxygenated fuel (such as methanol) into hydrogen ($H_2$) and byproducts (e.g. carbon monoxide (CO) and carbon dioxide ($CO_2$)). Common approaches include steam reforming, partial oxidation, and dry reforming.

Steam reforming systems involve the use of a fuel and steam ($H_2O$) that is reacted in heated tubes filled with catalysts to convert the hydrocarbons into principally hydrogen and carbon monoxide. An example of the steam reforming reaction is as follows:

$$CH_4 + H_2O \rightarrow CO + 4H_2$$

Partial oxidation reformers are based on substoichiometric combustion to achieve the temperatures necessary to reform the hydrocarbon fuel. Decomposition of the fuel to primarily hydrogen and carbon monoxide occurs through thermal reactions at high temperatures of about 700°C to about 1000°C. The heat required to drive the reaction is typically supplied by burning a portion of the fuel. Catalysts have been used with partial oxidation systems (catalytic partial oxidation) to promote conversion of various sulfur-free fuels, such as ethanol, into synthesis gas. The use of a catalyst can result in acceleration of the reforming reactions and can provide this effect at lower reaction temperatures than those that would otherwise be required in the absence of a catalyst. An example of the partial oxidation reforming reaction is as follows:

$$CH_4 + \tfrac{1}{2}O_2 \rightarrow CO + 2H_2$$

Dry reforming involves the creation of hydrogen and carbon monoxide in the absence of water, for example using carbon dioxide. An example of the dry reforming reaction is depicted in the following reaction:

$$CH_4 + CO_2 \rightarrow 2CO + 2H_2$$

As previously stated, the reformer, as well as several other automotive systems, operate at elevated temperatures. The reformer may be heated within an enclosure or a segmented portion of an enclosure (e.g., the enclosure housing the SOFC stack). Further, in order to start up these systems (e.g. reformer, catalytic converter, waste energy recovery, stack heat up, and other treatment devices, as well as combinations comprising at least one of these systems), a micro-reformer can be employed. The micro-reformer, which can be any type of reformer, or catalytic or gas phase combustor, is preferably an exothermic partial oxidation reformer. Since this micro-reformer produces heat and reformate, the combination can be employed to heat or otherwise bring the various systems up to the desired temperature.

Generally, the working contents of the reformer and connections between elements of the reformer sub-system may be sealed with sealing methods and apparatus including, but not limited to, welding, face seals, flange seals, seals with or without high temperature gasket material , deformation seals such as magna-form or rolling, as well as combinations comprising at least one of the foregoing sealing methods and apparatus, and the like.

The SOFC may be used in conjunction with an engine, for example, to produce tractive power for a vehicle. Within the engine, SOFC effluent, air, and/or fuel are burned to produce energy, while the remainder of unburned fuel and reformed fuel is used as fuel in the SOFC. The engine can be any conventional combustion engine including, but not limited to, internal combustion engines such as spark ignited and compression ignited engines, including, but not limited to, variable compression engines.

Similar to the engine, the turbine can be employed to recover energy from the engine effluent to produce tractive power and further to recover energy to operate the compressor(s) and preferably to generate electricity for various uses throughout the system and/or vehicle. The turbine employed can be any conventional turbine useful in automotive or power generation applications. In a preferred embodiment, the turbine and/or compressor may be accelerated or decelerated by a motor/generator to increase the compression (when required to increase the compression for optimal system performance) or to decrease compression (when excessive energy is available in the exhaust gases). For example, a high-speed electrical machine can be linked to the turbine and compressor.

After passing through the turbine, the SOFC effluent preferably enters a catalytic converter in order to attain extremely low, nearly zero emissions of hydrocarbons and nitric oxide. The catalytic converter is typical of those used in automotive applications, including those employing noble metals and alloys thereof, such as platinum, rhodium and palladium catalysts and alloys thereof, among other catalysts and/or particulate filtering and destruction.

Optional equipment which additionally may be employed includes, but is not limited to, sensors and actuators, heat exchangers, a battery, a fuel reformer, a burner, phase change material, a thermal storage system, a plasmatron, a desulfurizer, or any combination comprising at least one of the foregoing equipment. Desulfurizer equipment may also be employed, for example, if the fuel is rich in sulfur, or if the catalyst employed in the SOFC is particularly intolerant to sulfur, such as nickel-based catalysts.

Referring now to Figure 3, a SOFC system 100 is schematically depicted. SOFC system 100 comprises a SOFC stack 110 contained within an enclosure 130 (commonly referred to as a hot box). The SOFC stack 110 is generally coupled to a fuel inlet 120, for example, from a reformer system (not shown) as described above, which may also be provided outside of the enclosure 130, or a separate plenum (not shown). In certain embodiments, the fluid within the plenum are at a higher pressure than the pressure resulting in the SOFC stack 110, which allows for pressure reduction controls rather than pressure increase controls. Unreacted fuel and by-products exit the stack 110 via an outlet 125.

The pressure of the fuel flow through the SOFC stack 110 is typically a result of the inlet flow from at inlet 120, which is controlled by a fluid control 140. Alternatively, control 140 may control pressure of oxidant flow (not shown) or both fuel flow and oxidant flow. Generally, the flow within the SOFC stack 110 (fuel, oxidant, or both fuel and oxidant) is selected for the desired power output of the SOFC stack 110. The fluid control 140 may comprise one or more mechanical devices, including but not limited to gravity devices, compressors, pumps, vacuum systems, fluid chambers, other suitable flow regulation apparatus, or any combination comprising at least one of the foregoing devices may accomplish the flow regulation. Further, the fluid control 140 may comprise or further incorporate computing devices such as analog or digital circuitry to facilitate attainment of the desired pressure within stack 110. In one embodiment, the fluid control 140 comprises a variable downstream restriction pneumatically operated with a computer device.

The enclosure 130 generally may contain gases such as air, pure oxygen, inert gases, or other suitable gas. Further, the enclosure 130 may comprise temperature control and measurement capabilities, generally for measurement of parameters such as pressure, temperature, and also for determining leakage existence. To control the pressure within the enclosure 130, an enclosure pressure control 150 is included. The enclosure pressure control 150 may comprise one or more mechanical devices. The mechanical devices include, but are not limited to, vacuum systems, gravity devices, compressors, pumps, fluid chambers, gas regulation devices, or any combination comprising at least one of the foregoing mechanical devices. Further, the enclosure pressure control 150 may comprise or further incorporate computing devices such as analog or digital circuitry to facilitate attainment of the desired pressure within the enclosure 130. In one embodiment, the enclosure pressure control 150 comprises a variable downstream restriction pneumatically operated with a computer device.]

Using the fluid control 140 and the stack pressure control 150, a pressure differential may be created between the pressure in the enclosure 130 and the fluid pressure within the SOFC stack 110, wherein the pressure differential can be from higher in the enclosure 130 to higher within the SOFC stack 110. The pressure differential may vary depending on the particular system needs. In one embodiment the pressure differential is created by varying the pressure within the enclosure 130 based on the resultant pressure in the SOFC stack 110.

Typically, it may be desirable to maintain the

pressure differential at zero. For example, when the seals tend to leak a zero pressure differential between the pressure in the SOFC stack 110 and in the enclosure 130 can be employed. However, it is difficult to maintain a zero pressure differential along the entire flow path, e.g., within the SOFC stack 110, since the pressure along the flow path typically decreases while the pressure within the enclosure 130 remains constant. Therefore, the pressure differentials may result.

Generally, if prevention of leakage of fuel from the stack 110 into the enclosure 130 is particularly desirable, the controls 140 and 150 may control the pressures such that the enclosure 130 is maintained at a higher pressure as compared to stack 110. Such an operational mode insures that any leakage would be in the direction from the enclosure 130 into the stack 110. For example, during a period of increased fuel demand (e.g., during full throttle operation when the SOFC system 100 is employed within a motor vehicle), the increased fuel flow results in higher pressures within the stack 110, wherein the enclosure pressure control 150 compensates for the increased stack pressure by creating a higher pressure within the enclosure 130 as compared to the pressure within the stack 110, or by the stack control 140 creating a lower pressure within the stack 110 as compared to the pressure within the enclosure 130.

Also, during low temperature operation, such as start-up operation, a higher pressure may be maintained in enclosure 130 as compared to within stack 110.

Conversely, if prevention of leakage of air from the enclosure 130 into the stack 110 is a priority, higher pressure may be maintained in the stack 110 as compared to the pressure within the enclosure 130. Such an operational mode insures that any leakage would be in the direction from stack 110 into the enclosure 130. This may be accomplished by the fluid control 140 creating a higher pressure within the stack 110 as compared to the pressure within the enclosure 130, or by the enclosure pressure control 150 creating a lower pressure within the enclosure 130 as compared to the pressure within the stack 110.

Therefore, in accordance with the system 100, a method for operating a fuel cell system includes varying the difference between a first pressure, being the pressure within the stack 110, and a second pressure, being the pressure within the enclosure 130, depending on particular system operation concerns. In one embodiment, the pressures are independently controllable. In another embodiment, the pressure within the enclosure 130 can be varied in response to changes in the pressure resulting in the SOFC stack 110. In still another embodiment, the pressures are coordinated such that a zero pressure differential, a consistent pressure differential range, or specific pressure differential is created. In yet another embodiment, the second pressure is maintained at a higher level than the first pressure, for example, when it is desirable to substantially prevent fuel leakage from the stack 110 into the enclosure 130. In a still further embodiment, the pressure differential is maintained such that stress on the SOFC stack 110 is minimized.

Referring now to Figure 4, a system 200 includes generally the elements of system 100 described above with respect to Figure 3, and further including a reformer 210 within an enclosure 220. The enclosure 220 is preferably fluidly, and optionally thermally, isolated from the SOFC enclosure 130. The reformer 210 is coupled to the fuel inlet 120, which is subject to the fluid control 140. An outlet 225 of the reformer 210 is coupled to the SOFC stack 110 for feed fuel. Generally, the pressure of the fuel from the fuel inlet 120 determines the pressure within reformer 210. Optionally, a control (not shown) similar to control 140 may be employed to adjust the flow and/or pressure of the outlet 225 (which is also the inlet of the SOFC stack 110).

The pressure within the reformer enclosure 220 is controllable with a reformer pressure control 230, which may be used in conjunction with the stack enclosure pressure control 150 or independently from any stack enclosure pressure control (not shown). The reformer pressure control 230 may comprise devices similar to those described for pressure control 150.

As with the SOFC pressure control 150, the reformer pressure control 230 can be employed to maintain a pressure differential between the pressure in the enclosure 220 and the fluid pressure within the reformer 210, wherein the pressure differential can be from higher in the enclosure 220 to higher within the reformer 210. The pressure differential may vary depending on the particular system needs.

However, oftentimes it is desirable to operate the reformer with a higher pressure in the enclosure 220 as compared to the pressure within the reformer 210. Thus, the reformer enclosure pressure control 230, the fluid control 140, or both controls 140 and 230 may be operated to maintain the pressure differential. Therefore, any potential fluids leaking from the reformer 210 are subject to the increased pressure and are generally driven back into the reformer 210.

Therefore, in accordance with the system 200, a method for operating a reformer system includes varying the difference between the pressure within the reformer 210 and the pressure within the enclosure 220, depending on particular system operation concerns. In one embodiment, the pressures are independently controllable. In another embodiment, the pressures are coordinated such that a zero pressure differential, a consistent pressure differential range, or a specific pressure differential is created.

With the system described herein, various benefits may be realized in SOFC systems. Leakage into and out of the SOFC's and reformers may be eliminated or minimized by setting up pressure differentials with the various pressure controls. Further, the pressure differentials may relieve stresses on the existing seals used within each SOFC and between SOFC's, and further within the reformer seals. This may enable use of seals having a lower cost, prolong the life of the seals, and provide more productive SOFC's, SOFC stacks, and reformers.

While preferred embodiments have been shown and described, various modifications and substitutions may be made thereto without departing from the spirit and scope of the invention. Accordingly, it is to be understood that the apparatus and method have been described by way of illustration only, and such illustrations and embodiments as have been disclosed herein are not to be construed as limiting to the claims.

## Claims

**1.** A fuel cell system (100), comprising:

a fuel cell (110) disposed within an enclosure (130);
a fuel cell flow control (140); and
a pressure control (150).

**2.** The fuel cell system as in Claim 1, wherein the fuel cell flow control (140) and the pressure control (150) are coordinated to provide a suitable pressure differential between the fuel cell (110) and the enclosure (130).

**3.** The fuel cell system as in Claim 1, wherein said fuel cell flow control (140) controls pressure within the fuel cell (110) by regulation of a fuel flow, an oxidant flow, or both a fuel flow and an oxidant flow.

**4.** The fuel cell system as in Claim 1, wherein said fuel cell flow control (140) comprises a mechanical device selected from the group consisting of gravity devices, compressors, pumps, vacuum systems, fluid chambers, and any combination comprising at least one of the foregoing mechanical devices.

**5.** The fuel cell system as in Claim 1, wherein said fuel cell flow control (140) comprises a computing device selected from the group consisting of analog circuitry, digital circuitry, and any combination comprising at least one of the foregoing computing devices.

**6.** The fuel cell system as in claim 1, wherein said pressure control (150) controls pressure within the enclosure (130) by regulation of a gas within the enclosure.

**7.** The fuel cell system as in Claim 6, wherein said pressure control (150) comprises a mechanical device selected from the group consisting of gravity devices, compressors, pumps, vacuum systems, fluid chambers, and any combination comprising at least one of the foregoing mechanical devices.

**8.** The pressure control system as in Claim 6, wherein said pressure control (150) comprises a computing device selected from the group consisting of analog circuitry, digital circuitry, and any combination comprising at least one of the foregoing computing devices.

**9.** A fuel cell system (200), comprising:

a fuel cell (110) disposed within a first enclosure (130);
a fuel cell flow control (140);
a first pressure control (150);
a reformer (210) for generating fuel for the fuel cell disposed within a second enclosure (220); and
a second pressure control (230).

**10.** A pressure control system (200) for a reformer (210) within an enclosure (220), the pressure control system comprising:

a flow control (140) for controlling pressure within the reformer, and
a pressure control (230) for controlling pressure within the enclosure,

wherein said flow control and said pressure control are coordinated to provide a desired pressure differential between the reformer and the enclosure.

**11.** The pressure control system as in Claim 10, wherein said flow control (140) is a fuel flow control.

**12.** The pressure control system as in Claim 11, wherein said flow control (140) comprises a mechanical device selected from the group consisting of gravity devices, compressors, pumps, vacuum systems, fluid chambers, and any combination comprising at least one of the foregoing mechanical devices.

**13.** The pressure control system as in Claim 11, wherein said flow control (140) comprises a computing device selected from the group consisting of analog circuitry, digital circuitry, and any combination comprising at least one of the foregoing computing devices.

**14.** The pressure control system as in Claim 10, wherein said pressure control (230) controls pressure within the enclosure by regulation of a gas within the enclosure.

**15.** The pressure control system as in Claim 14, wherein said pressure control (230) comprises a mechanical device selected from the group consisting of gravity devices, compressors, pumps, vacuum systems, fluid chambers, and any combination comprising at least one of the foregoing mechanical devices.

**16.** The pressure control system as in Claim 14, wherein said pressure control (230) comprises a computing device selected from the group consisting of analog circuitry, digital circuitry, and any combination comprising at least one of the foregoing computing devices.

**17.** A method for operating a fuel cell system (100), comprising:

maintaining a fuel cell (110) disposed within an enclosure (130) at a first pressure level;
maintaining the enclosure at a second pressure level; and
coordinating said first pressure level and said second pressure level.

**18.** The method as in Claim 17, wherein said first pressure level and said second pressure level are coordinated depending on a type of leakage to be prevented.

**19.** The method as in Claim 18, wherein said first pressure level is substantially equal to said second pressure level.

**20.** The method as in Claim 18, wherein said first pressure level is greater that said second pressure level.

**21.** The method as in Claim 18, wherein said first pressure level is less than said second pressure level

**22.** The method as in Claim 17, wherein said first pressure level is a result of a flow into the fuel cell, and further wherein said second pressure level is controlled relative to the first pressure level.

**23.** The method as in Claim 17, further comprising operating a reformer (210) for processing a fluid for use by the fuel cell (110), wherein said first pressure level is at least partially dependent on a pressure of the fluid, further comprising maintaining a third pressure level in said reformer, and coordinating said third pressure level with said pressure of the fluid.

**24.** A method for operating a reformer system (200), comprising:

maintaining a reformer (210) disposed within an enclosure (220) at a first pressure level;
maintaining the enclosure at a second pressure level; and
coordinating said first pressure level and said second pressure level.

**25.** The method as in Claim 24, wherein said first pressure level and said second pressure level are coordinated depending on a type of leakage to be prevented.

**26.** The method as in Claim 25, wherein said first pressure level is substantially equal to said second pressure level.

**27.** The method as in Claim 25, wherein said first pressure level is greater that said second pressure level.

Fig.1.

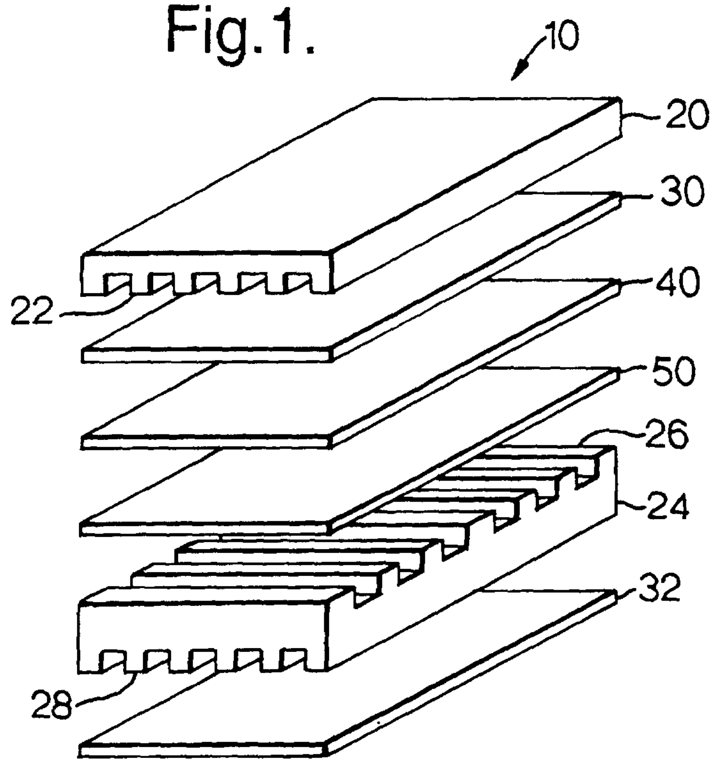
10
20
30
40
50
26
24
32
22
28

Fig.2.

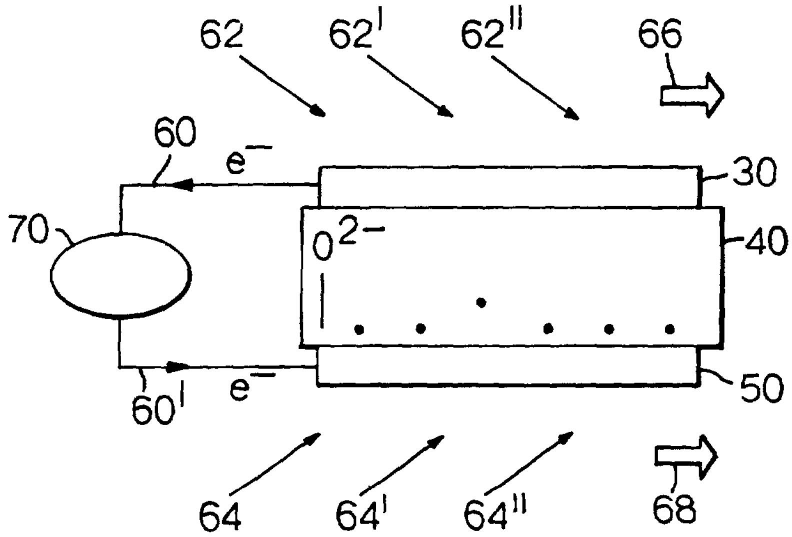
62
62'
62''
66
60
e⁻
30
70
40
50
e⁻
60'
64
64'
64''
68

Fig.3.

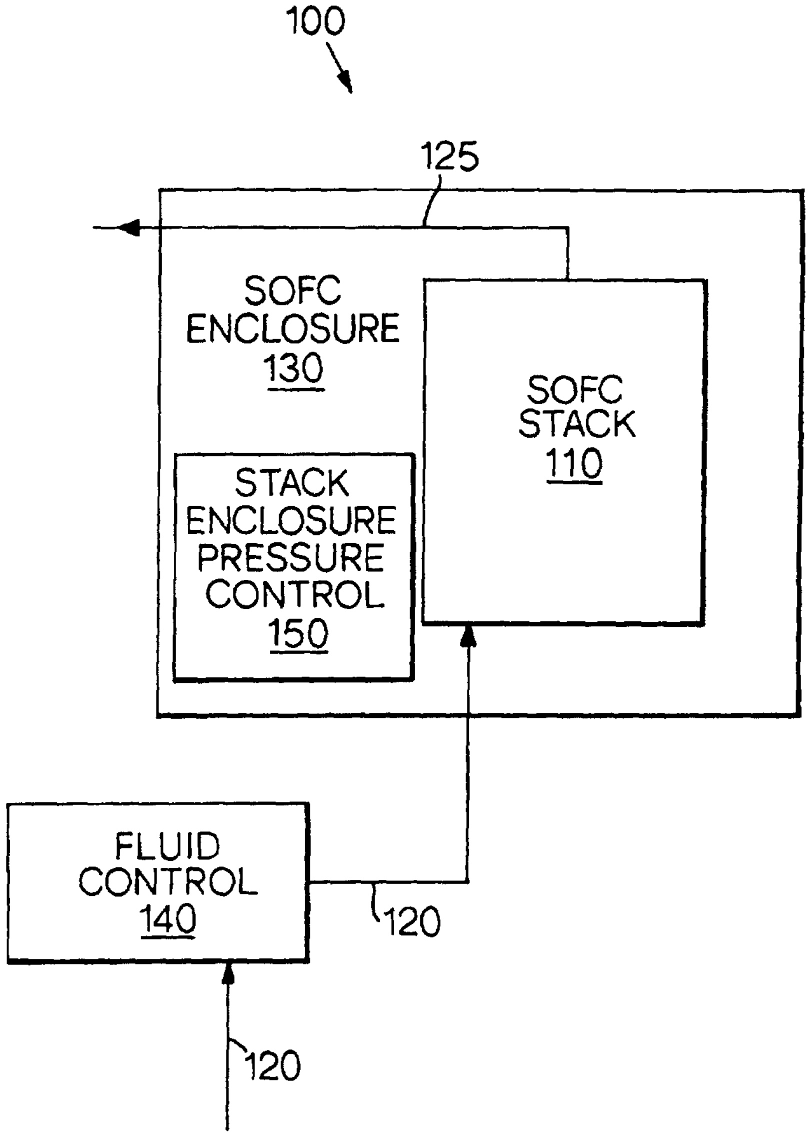
100
125
SOFC
ENCLOSURE
130
SOFC
STACK
110
STACK
ENCLOSURE
PRESSURE
CONTROL
150
FLUID
CONTROL
140
120
120

Fig.4.

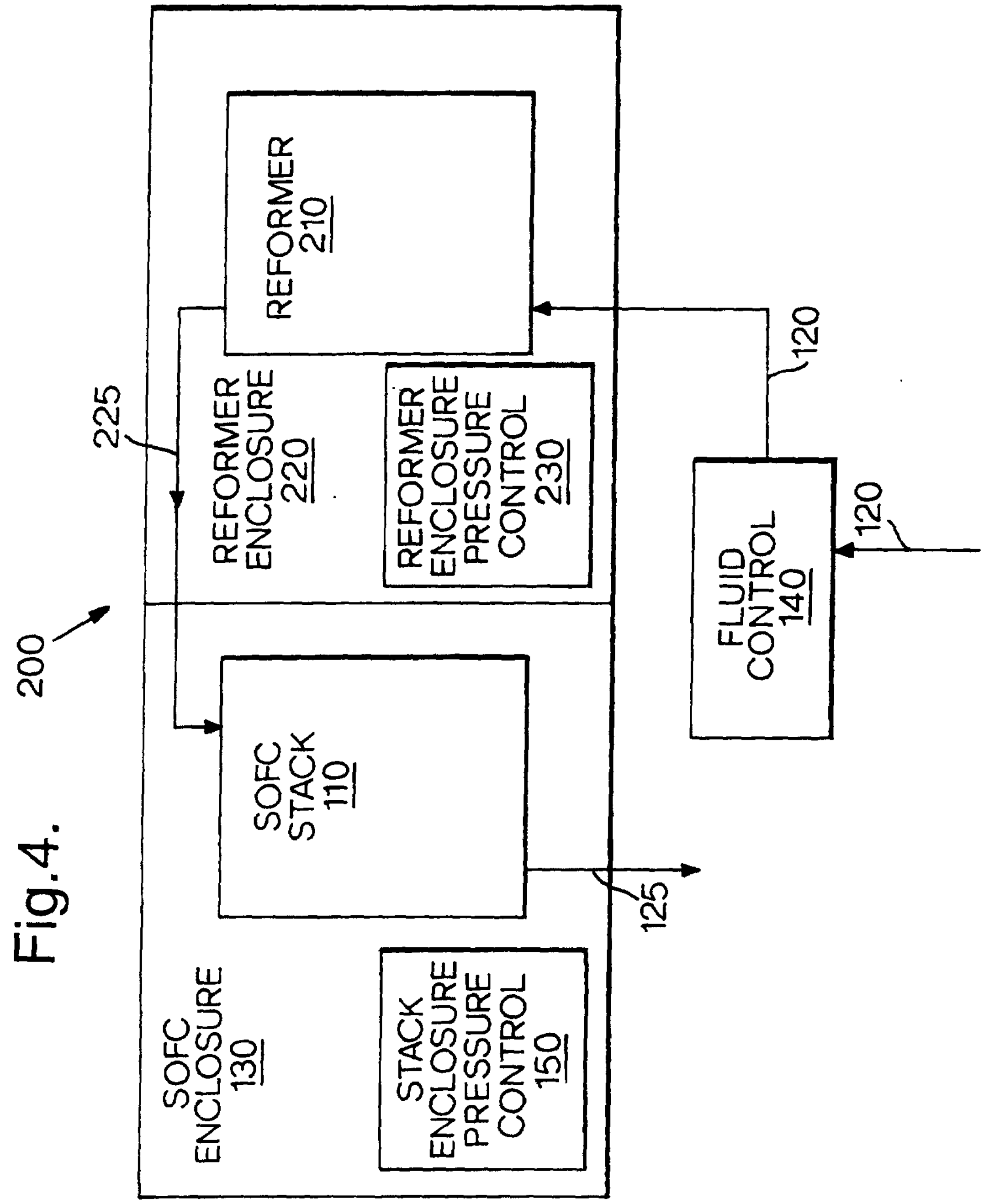
200
REFORMER
210
225
REFORMER ENCLOSURE
220
REFORMER ENCLOSURE PRESSURE CONTROL
230
120
FLUID CONTROL
140
120
SOFC STACK
110
125
SOFC ENCLOSURE
130
STACK ENCLOSURE PRESSURE CONTROL
150